# EUROPEAN PATENT APPLICATION

(11) **EP 1 146 245 A2**
(43) Date of publication of application: **17.10.2001**
(21) Application number: 00830436.2
(22) Date of filing: 22.06.2000
(51) Int. Cl.: F16D 55/00, F16D 65/00

(54) **Cover for customizing the external appearance of brake system components**

(30) Priority: 14.04.2000 IT MI000853
(71) Applicant: Freni Brembo S.p.A., 24035 Curno, Bergamo (IT)
(72) Inventor: Gotti, Giovanni, 24011 Alme' (Bergamo) (IT); Lavezzi, Roberto, 24030 Brembate di Sopra (Bergamo) (IT)
(74) Representative: Maccalli, Marco

(57) **Abstract**

A brake system component, such as a disc brake caliper, comprises a body (1) with at least one external portion bearing customizing elements. The abovementioned customizing elements are advantageously on a cover (3) attached to a first part (4) of the body (1) by fixing means, the cover (3) and the body (1) being integral with each other.

## Description

The present invention relates to a brake system component - particularly, but not necessarily, for motorcycling or automotive applications - bearing external customizing elements such as colours, trademarks, badges and so forth.

It is known that brake system components for motor vehicles, such as the disc brake calipers or the fluid reservoir of the brake pump of a motorcycle, are in positions where they can be seen and consequently contribute to the aesthetic appearance of the motor vehicle. From this arises the wish to be able to customize these components and adapt them to the aesthetic characteristics of the specific vehicle.

It should also be pointed out that, in recent times, a growing importance has been attached to the customization of the abovementioned brake system components in automotive applications too, because of the growing use of wheels with light-alloy discs shaped into spokes, so that components such as the calipers of the disc brakes are clearly visible from outside the wheel.

As a consequence of the fact that the abovementioned brake system components are visible, motor vehicle and automotive manufacturers are asking that these components be supplied to them in increasingly customized forms with colours, trademarks, coats of arms and the like, according to their specifications.

The said customizing of the brake system components is of course carried out during their manufacture, and more specifically prior to the assembly of the various components, such as, for example, the two half-bodies of a disc brake caliper. The necessity of supplying brake system components that are structurally identical but customized to make them different from each other, even if only in terms of colour, involves significant disadvantages for those who have to produce them. For example, even when considering the issue purely from the point of view of management and logistics, customizing these components raises the manufacturing costs because the components have to be stored and controlled with the customizing elements requested in the individual customer orders. Furthermore, although the manufacture of customized components is limited to the specific quantities required in individual customer orders, a customized component obviously cannot be reconverted for later orders with different customizing specifications, which means that manufactured parts have to be scrapped.

The necessity of producing the customized components only after having received confirmation of the individual customer order from the client rules out the possibility of having a stock of ready-prepared components.

Another difficulty arises in the case of components that have to be produced from a mould bearing a wording or badges. In such cases, even small modifications to the wording or to the badges will involve remaking the moulds, in spite of their high cost.

The technical problem addressed by the present invention is to devise a brake system component capable of fulfilling the above requirement for customization and, at the same time, to obviate the problems referred to.

This problem is solved by a brake system component in accordance with Claim 1.

Further features and the advantages of the brake system component will be found in the following description of a preferred embodiment thereof. This is provided by way of non-restrictive indication with reference to the accompanying figures, in which:
- Figure 1 is an axial view of a brake system component according to the invention;
- Figure 2 is a side view in partial section of the brake system component of Figure 1;
- Figure 3 is an front view, with part removed, of the brake system component of Figure 1;
- Figure 4 is a side view in partial section of a brake system component according to the invention in accordance with a second embodiment;
- Figures 5 and 6 show enlargements of the details indicated at A and B, respectively, in Figure 5;
- Figure 7 shows the brake system component of Figure 4 with part removed;
- Figure 8 is an front view of a brake system component according to the invention in accordance with a third embodiment;
- Figure 9 is a side view in partial section of the brake system component of Figure 8;
- Figures 10 and 11 are enlargements of the details indicated at C and D, respectively, in Figure 9 and
- Figure 12 is a side view, in partial section and with parts removed, of a brake system component according to the invention in accordance with a fourth embodiment.

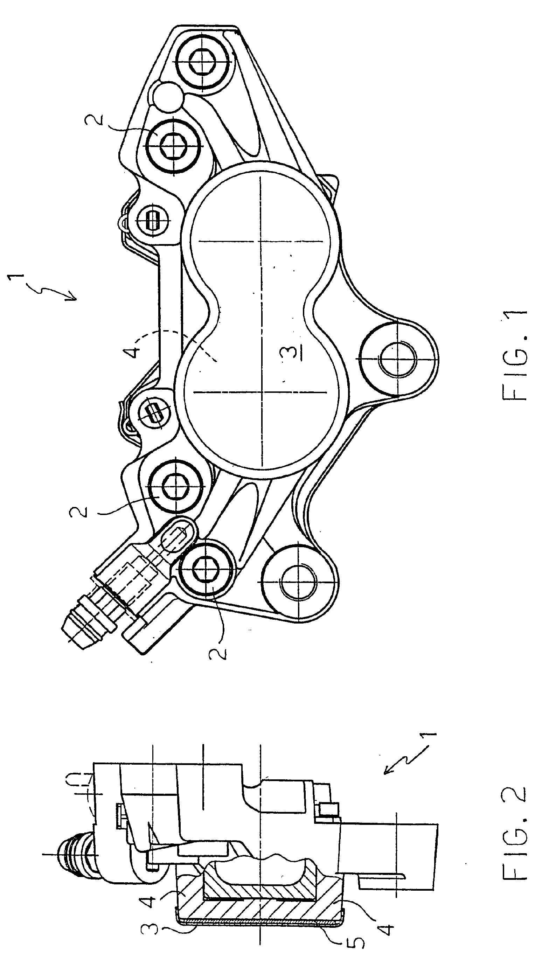

Referring to Figures 1 to 3, the number 1 denotes a component of a brake system. In the example, the component 1 takes the form of a caliper for a disc brake, e.g. for a motorcycle.

The body of the caliper is formed entirely conventionally by two separate half-bodies which are fastened together with screws or bolts 2.

The caliper body has to be made from two separate half-bodies by chill casting, because of the need for machining in order to obtain the dimensionally accurate housings, with low tolerances, for the hydraulic pistons and their seals, as well as housings for the brake pads. Channels are also provided inside the two half-calipers for the hydraulic fluid.

The caliper 1 comprises an external portion 3 which on its external surface bears customizing elements such as colours, decorations, logos, trademarks and/or badges which, for simplicity of illustration, have not been reproduced in the figures.

The customizing elements are advantageously on a support 3 which is attached to the body by fixing means so that the support and the caliper body are integral with each other.

In the example shown in the figures, the support takes the form of a cover 3 attached to the exterior of the body of the caliper, more precisely to a half-body of the caliper.

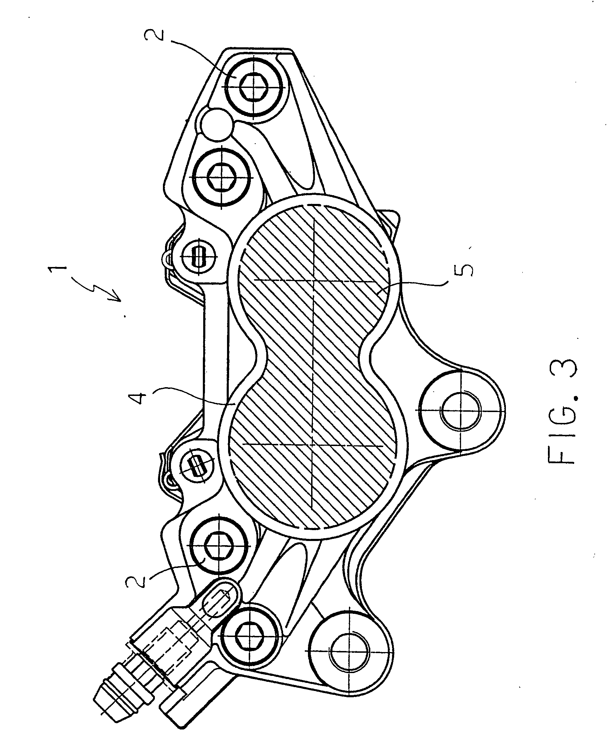

The cover 3 is made from a synthetic material, e.g. plastic, and is shaped in such a way as to fit the shape of a corresponding part 4 of the half-body of the caliper 1. In the example the cover 3 and the surface 4 present two flat and parallel surfaces intended to be bonded together by the interposition of a piece of double-sided adhesive film 5 (indicated by hatching in Figure 3) or a layer of adhesive. The adhesive used to bond the cover to the part 4 of the half-body of the caliper 1 is preferably of acrylic or polyurethane type, although other types of adhesive can also be used.

The cover 3 can also be made of metallic material, as opposed to synthetic material, for example aluminium or sheet steel, and similarly it is possible to use other fixing means to make the support 3 of the customizing elements, that is to say the cover, integral with the part 4 of the half-body of the caliper 1. For example, the cover can be fixed in position by welding, crimping or other equivalent fixing means.

The cover 3 can also be fixed to the part 4 of the half-body of the caliper 1 by removable fixing means, it being possible for example to attach the support of the customizing elements by a snap action, by pressure, by a force fit or by using screws, bolts or other equivalent methods of fixing it to the part 4 of the half-body of the caliper 1.

As stated earlier, the support 3, i.e. the cover, bears the customizing elements which customize the body of the caliper 1 in accordance with the customer's specific requirements. These customizing elements may consist of a simple colour, for example red, or of chrome plating or a name or wording, possibly in various different colours. Furthermore, a decoration, trademark or coat of arms can be applied to the support 3 so that the support 3 can be shaped as desired, e.g. in such a way as to reproduce a three-dimensional trademark.

Besides being shaped in the desired manner, the support 3 can also include low-relief and/or high-relief features in such a way as to create aesthetic three-dimensional effects. In this case it is particularly advantageous to use plastic covers made by hot-moulding or to use aluminium covers made by cold mechanical deformation.

Three different embodiments of the brake system component according to the invention are described below. Parts which are structurally and functionally equivalent to those already described are distinguished by the same reference numbers.

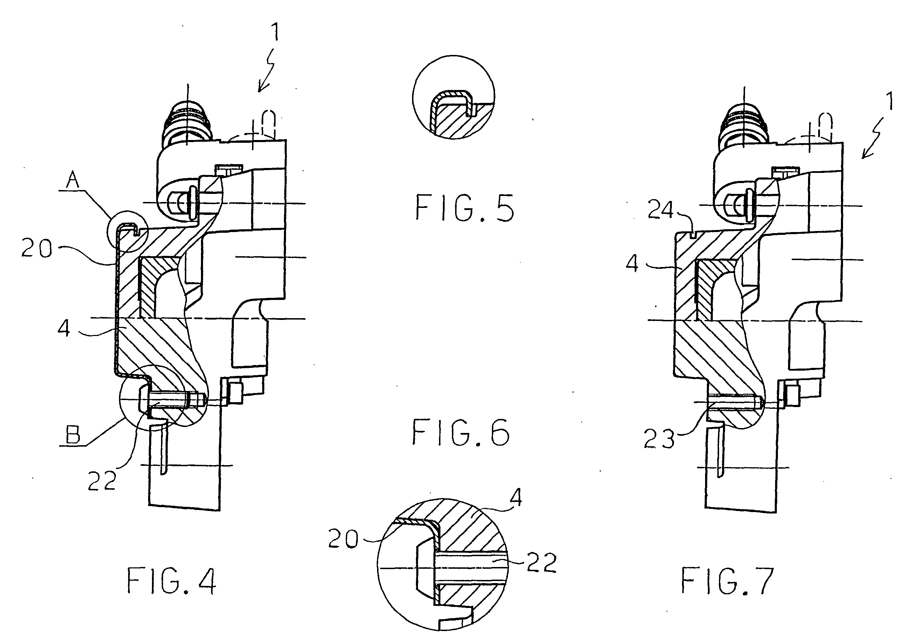

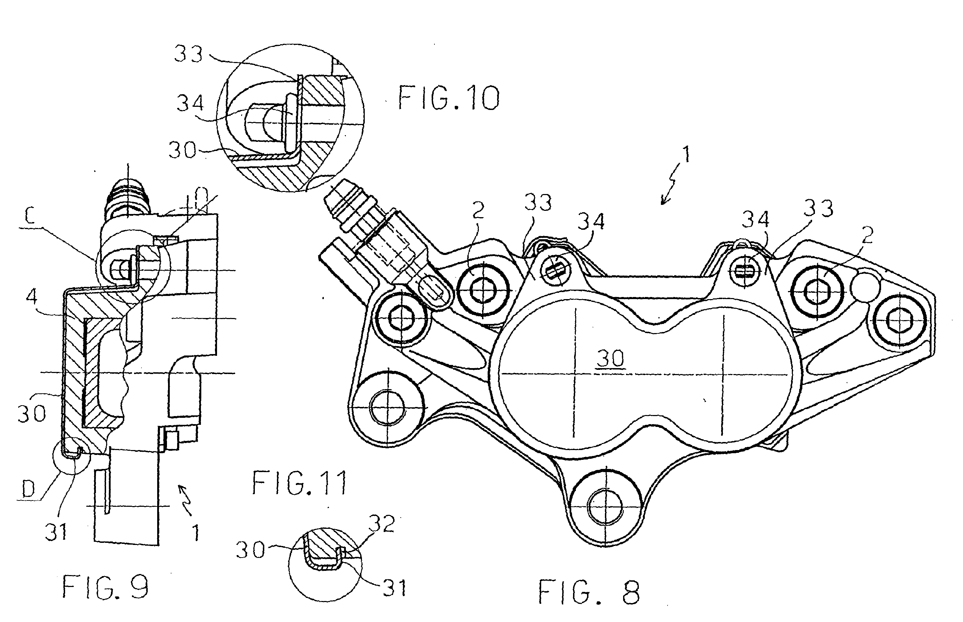

Figures 4 to 7 refer to a second embodiment of a brake system component 1 according to the invention. Once again the brake system component is a disc brake caliper to which is attached a support 20 bearing the customizing elements. The support 20 corresponds substantially to that described above with the exception of the system used for fixing it to the part 4 of the half-body of the caliper 1. Thus, in this embodiment, the support 20, i.e. the cover, possesses an upper edge 21 inserted and engaged in a corresponding retaining slot 24 (see Fig. 7) in the part 4 of the half-body of the caliper 1. The lower part of the cover 20 is fixed by connecting screws 22 engaged in corresponding tapped holes 23 formed in the part 4 of the half-body of the caliper 1. Holes are formed in the cover 20, their diameter being such as to allow the passage of the threaded shank but not of the heads of the screws 22.

Figures 8 to 11 refer to a third embodiment of a brake system component 1 according to the invention. Once again, the brake system component is a disc brake caliper to which is attached a support 30 bearing customizing elements. The support 30 corresponds substantially to the support 20 described earlier with the exception of the system used to fix it to the part 4 of the half-body of the caliper 1. Thus, in this embodiment, the cover 30 possesses a lower edge 31 inserted and engaged in a corresponding retaining slot 32 formed in the underside of the part 4 of the half-body of the caliper 1 (see Fig. 11). The cover 30 has two shaped upper tabs 33 where the cover 30 is engaged by the pins 34 used to fix the brake pads to the caliper 1. Holes are formed in the tabs 33 of the cover 10, their diameter being such as to allow the passage of the shank but not of the head of the abovementioned pins 34.

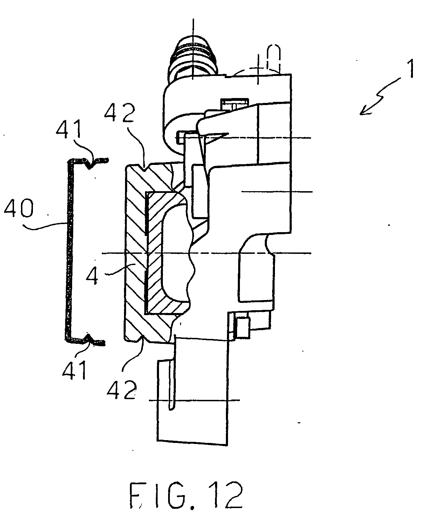

Figure 12 refers to a fourth embodiment of a brake system component 1 according to the invention. Once again, the brake system component is a disc brake caliper to which is attached a support 40, in the example a cover, bearing customizing elements. The support 40 corresponds substantially to the support 20 described above with the exception of the system used for fixing it in position. Thus, in this variant, the cover 40 is shaped in such a way as to exhibit at least two opposite edges 41, a top edge and a bottom edge in Figure 12, which face each other and are designed to snap into position with a predetermined elastic force into corresponding slots 42 formed in the part 4 of the half-body of the caliper 1.

From the above description it is obvious that in order to customize the brake system component 1 according to the invention in a different way, it is sufficient to attach to it, either permanently or removably, a support (3, 20, 30 or 40) bearing different customizing elements. Consequently it is possible to produce and keep a stock of brake system components that are identical with each other and to customize them only when the customer's order arrives. Among other things, a single type of support can even be applied to system components not having the same technical characteristics, such as brake calipers having different dimensions.

As indicated earlier, the support to be attached to the brake system component can be customized by widely different methods. Attention should be drawn here to the fact that the support for attaching to the brake system component may carry retroreflective means. This is particularly advantageous in the case of a brake caliper for a motorcycle because it will make the motorcycle clearly visible from the side even at night, without the need to attach further retroreflective means to the front fork or to the frame of the motorcycle.

It will be obvious that the brake component that is to be customized may also differ from a brake caliper. Thus, for example, it is possible to apply a customized support to the brake fluid reservoir connected to the front brake pump of a motorcycle. This reservoir is usually positioned on the right-hand side of the motorcycle handlebar (more precisely next to the right-hand lever of the handlebar) and is therefore clearly visible. In this case the support bearing the customizing elements can take the form of an identifying plate for attachment to the exterior of the brake fluid reservoir in one of the ways already indicated. Similarly, the same support in the form of an identifying plate bearing the customizing elements can be applied to the reservoir of the fluid of a hydraulic clutch which in motorcycles is usually positioned next to the left-hand lever of the handlebar.

In consideration of the above account it is obvious that the brake system component according to the invention fully satisfies the abovementioned requirement to be customized according to the most diverse specific requirements of the customer, and at the same time obviates the problems referred to in the introductory part of the description. In particular, the brake system component according to the invention can be customized in the manner indicated above simply, quickly and cheaply.

The above description refers to certain preferred embodiments, but other variants can be introduced without departing from the scope of protection of the invention as defined in the following claims.

For example, the caliper may be of the type with a monolithic body, and the component need not be a disc brake caliper.

## Claims

1. Brake system component, particularly for motorcycling or automotive applications, comprising a body (1) with at least one external portion bearing customizing elements, the component being **characterized in that** the said customizing elements are on a support (3; 10; 20; 30; 40) attached to the said body (1) by fixing means, the support (3; 10; 20; 30; 40) and the body (1) being integral with each other.

2. Brake system component according to Claim 1, in which the said support (3; 10; 20; 30; 40) is a cover attached to the exterior of the said body.

3. Brake system component according to Claim 1, in which the said support is an identifying plate attached to the exterior of the said body.

4. Brake system component according to Claim 1, in which the said support (3; 10; 20; 30; 40) is shaped in such a way as to fit the shape of a first part (4) of the said body (1).

5. Brake system component according to Claim 1, in which the said customizing elements include colours and/or decorations.

6. Brake system component according to Claim 1, in which the said customizing elements include logos and/or badges.

7. Brake system component according to Claim 1, in which the said customizing elements include high relief.

8. Brake system component according to Claim 1, in which the said customizing elements include low relief.

9. Brake system component according to Claim 1, in which the said customizing elements include retroreflective means.

10. Brake system component according to Claim 1, in which the said support (3; 10; 20; 30; 40) is made of synthetic material.

11. Brake system component according to Claim 1, in which the said support (3; 10; 20; 30; 40) is made of metallic material.

12. Brake system component according to Claim 1, in which the said support (3; 10; 20; 30; 40) is attached to a first part (4) of the said body (1) by adhesive bonding.

13. Brake system component according to Claim 1, in which the said support (3; 10; 20; 30; 40) is attached to a first part (4) of the said body (1) by crimping.

14. Brake system component according to Claim 1, in which the said support (3; 10; 20; 30; 40) is attached to a first part of the said body by removable fixing means.

15. Brake system component according to Claim 1, in which the said support (3; 10; 20; 30; 40) is attached by a snap action to a first part (4) of the said body (1).

16. Brake system component according to Claim 1, in which the said support (3; 10; 20; 30; 40) is attached by a pressure fit to a first part (4) of the said body (1).

17. Brake system component according to Claim 1, in which the said support (3; 10; 20; 30; 40) is attached to a first part (4) of the said body (1) by means of rivets.

18. Brake system component according to Claim 1, in which the said support (3; 10; 20; 30; 40) is attached to a first part (4) of the said body (1) by means of screws or pins.

19. Brake system component according to Claim 1, in which the said body is a disc brake caliper (1).

20. Brake system component according to Claim 1, in which the said body is a portion of a brake pump reservoir.

21. Brake system component according to Claim 1, in which the said support (3; 10; 20; 30; 40) is attached to a first part (4) of the said body (1) by welding.
